# EUROPÄISCHE PATENTSCHRIFT

(11) **EP 2 469 108 B1**
(45) Veröffentlichungstag und Bekanntmachung des Hinweises auf die Patenterteilung: **14.05.2014**
(21) Anmeldenummer: 11194739.6
(22) Anmeldetag: 21.12.2011
(51) Int. Cl.: F16C 9/02, F16C 21/00, F02F 7/00

(54) **Brennkraftmaschine, insbesondere für Rennfahrzeuge**
Combustion engine, in particular for racing vehicles
Moteur à combustion interne, en particulier pour voiture de course

(30) Priorität: 23.12.2010 AT 21232010
(43) Veröffentlichungstag der Anmeldung: 27.06.2012
(73) Patentinhaber: AVL List GmbH, 8020 Graz (AT)
(72) Erfinder: Weihrauch, Karl, 8043 GRAZ (AT)
(74) Vertreter: Babeluk, Michael

(56) Entgegenhaltungen:
- WO-A1-92/14920
- WO-A2-2006/130447
- DE-A1- 10 153 018
- DE-A1-102007 007 449
- DE-A1-102008 059 621
- DE-C- 335 133
- US-A- 1 759 147

## Beschreibung

Die Erfindung betrifft eine Brennkraftmaschine, insbesondere für Rennfahrzeuge, mit vier Zylindern, mit einer Kurbelwelle, welche über ein erstes, ein zweites und ein drittes Hauptlager gelagert ist, wobei das erste Hauptlager und das dritte Hauptlager außerhalb der äußeren Kröpfungen der Kurbelwelle und das zweite Hauptlager zwischen zwei inneren Kröpfungen der Kurbelwelle angeordnet ist, wobei das erste und dritte Hauptlager durch jeweils zumindest ein Wälzlager gebildet ist und wobei das zweite Hauptlager durch zumindest ein Gleitlager gebildet ist. Eine solche Brennkraftmaschine ist aus US 1 759 147 A bekannt.

Brennkraftmaschinen mit Kurbelwellen für vier Zylinder, welche durch drei Hauptlager gelagert sind, sind aus den Veröffentlichungen DE 12 94 100 B, GB 856 616 A, GB 607 999 A und GB 179 959 A bekannt.

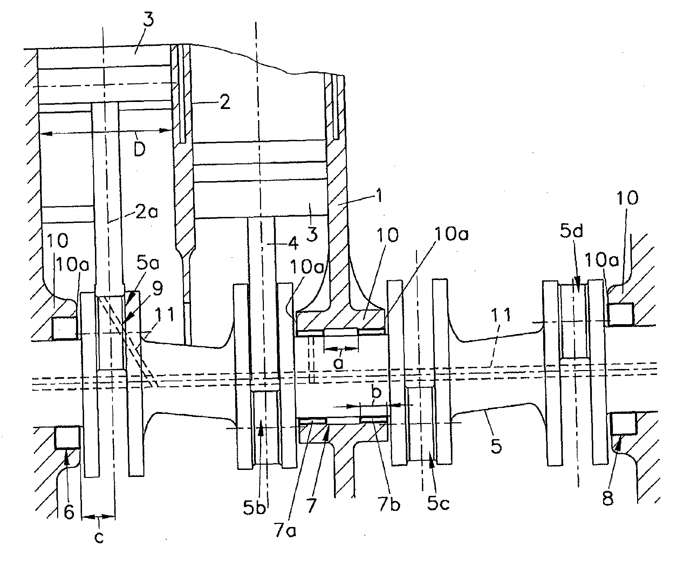

Hubkolbenmaschinen, deren Kurbelwellen sowohl über Gleitlager, als auch über Wälzlager gemischt gelagert sind, sind aus den Druckschriften EP 1 978 250 A1, DE 20 02 470 A1 und GB 704 554 A bekannt. Weiters wird durch den Beitrag "Die Wälzlagerung im Verbrennungsmotor als Maßnahme zur Reduzierung des Kraftstoffverbrauches", M. KALENBORN et al., FEV, AVL-Konferenz "Engine and Environment", 8. bis 10. September 2010, Graz, Seite 159, Bild 15, eine Brennkraftmaschine mit vier Zylindern geoffenbart, deren Kurbelwelle über fünf Hauptlager gelagert sind, wobei die äußeren Hauptlager als Wälzlager und das innerste Hauptlager als Gleitlager ausgebildet ist. Nachteilig ist, dass derartige Lagerungen die Baulänge und das Gewicht der Brennkraftmaschine laufzeitig beeinflussen.

Aufgabe der Erfindung ist es, eine reibungsarme Brennkraftmaschine mit möglichst geringer Baulänge und geringem Gewicht zu schaffen.

Erfindungsgemäß wird dies dadurch erreicht, dass zumindest eine Hauptlagerwand eines Hauptlagers einen Abstand zur nächstliegenden Zylinderachse aufweist, welcher maximal 30%, vorzugsweise maximal etwa 25% des Zylinderdurchmessers entpricht.

Dadurch, dass nur an den Enden und in der Mitte jeweils eine Lagerung vorgesehen ist, kann die Baulänge der Brennkraftmaschine sehr klein gehalten werden. Die Verwendung von Wälzlagern bewirkt eine deutliche Reduktion der Kurbelwellenreibung im Vergleich zu nur durch Gleitlager gebildeten Hauptlagern. Dadurch, dass nur ein Hauptlager als Gleitlager ausgebildet ist, kann die Schmierölmenge und somit die Ölpumpengröße sehr klein gehalten werden.

Um die Kurbelwellensteifigkeit zu erhöhen, kann vorzugsweise vorgesehen sein, dass das zweite Hauptlager durch zwei vorzugsweise mit axialem Abstand voneinander nebeneinander angeordnete Gleitlager gebildet ist. Diese Lösung erlaubt eine sehr geringe Motorbaulänge und ein sehr geringes Gewicht bei sehr hoher Kurbelwellensteifigkeit.

Um eine einfache Montage zu ermöglichen, kann vorgesehen sein, dass zumindest eines der Hauptlager als in einer Meridianebene geteiltes Lager mit zwei zusammenfügbaren Lagerhälften ausgebildet ist. Alternativ oder zusätzlich ist es auch möglich, dass die Kurbelwelle zumindest einfach geteilt ist.

Die Durchbiegung der Kurbelwelle wird so klein wie möglich gehalten in dem zumindest eine Hauptlagerwand eines Hauptlagers einen Abstand zur nächstliegenden Zylinderachse aufweist, welcher maximal 30%, vorzugsweise maximal etwa 25% des Zylinderdurchmessers (D) entspricht.

Die Versorgung der Pleuellager mit Öl kann über vom zweiten Hauptlager ausgehende, zum Beispiel gebohrte, Ölkanäle in der Kurbelwelle erfolgen.

Die Erfindung wird im Folgenden anhand der Figur näher erläutert.

Die Figur zeigt schematisch ein Kurbelgehäuse 1 einer Brennkraftmaschine mit vier in Reihe angeordneten Zylindern 2, in welchen hin- und hergehende Kolben 3 angeordnet sind, welche über Pleuelstangen 4 auf eine Kurbelwelle 5 einwirken.

Die Kurbelwelle 5 ist über drei Hauptlager 6, 7, 8 im Kurbelgehäuse 1 gelagert, wobei die beiden äußeren Hauptlager 6, 8 durch Wälzlager und das innere Hauptlager 7 durch zumindest ein Gleitlager gebildet ist. Die äußeren Hauptlager 6, 8 sind außerhalb der äußeren Kröpfungen 5a, 5d der Kurbelwelle 5 angeordnet. Das innere Hauptlager 7 befindet sich zwischen den beiden inneren Kröpfungen 5b, 5c.

Um Gewicht und Baulänge zu sparen, weist das innere Hauptlager 7 zwei separate schmale Gleitlager 7a, 7b auf, welche in axialem Abstand a voneinander angeordnet sind. Der axiale Abstand a beträgt beispielsweise die axiale Breite b der beiden Gleitlager 7a, 7b.

Durch das durch zwei Gleitlager gebildete mittlere Hauptlager kann die Steifigkeit der Kurbelwelle 5 wesentliche erhöht werden.

Um die Durchbiegung der Kurbelwelle 5 so gering wie möglich zu halten, sind die Hauptlager 6, 7, 8 sehr nahe am Kraftangriffspunkt der Pleuellager 9 angeordnet. Der Abstand c zwischen der der nächsten Kröpfung 5a, 5b, 5c, 5d zugewandten Stirnseite 10a der Hauptlagerwand 10 und der nächstliegenden Zylinderachse 2a beträgt dabei höchstens 30%, vorzugsweise höchstens 25% des Zylinderdurchmessers D.

Die gemischte Lagerung hat den Vorteil, dass die Reibung wesentlich verringert werden kann. Da nur mehr das mittlere Hauptlager 7 mit Schmieröl versorgt werden muss, kann die Schmierölmenge und die Ölpumpe sehr klein gehalten werden. Zur Schmierölversorgung von als Gleitlager ausgebildeten Pleuellagern 9 können zwischen dem zweiten Hauptlager 7 und den Pleuellagern 9 beispielsweise durch Bohrungen gebildete Ölkanäle 11 in der Kurbelwelle 5 angeordnet sein.

Die drei- bzw. vierfache Lagerung ermöglicht es, Gewicht und Baulänge stark zu vermindern.

## Patentansprüche

1. Brennkraftmaschine, insbesondere für Rennfahrzeuge, mit vier Zylindern, mit einer Kurbelwelle (5), welche über ein erstes, ein zweites und ein drittes Hauptlager (6, 7, 8) gelagert ist, wobei das erste Hauptlager (6) und das dritte Hauptlager (8) außerhalb von äußeren Kröpfungen (5a, 5d) der Kurbelwelle (5) und das zweite Hauptlager (7) zwischen zwei inneren Kröpfungen (5b, 5c) der Kurbelwelle (5) angeordnet ist, wobei das erste und dritte Hauptlager (6, 8) durch jeweils zumindest ein Wälzlager gebildet ist und wobei das zweite Hauptlager (7) durch zumindest ein Gleitlager gebildet ist, **dadurch gekennzeichnet, dass** zumindest eine Hauptlagerwand (10) eines Hauptlagers (6, 7, 8) einen Abstand (c) zur nächstliegenden Zylinderachse (2a) aufweist, welcher maximal 30%, vorzugsweise maximal etwa 25% des Zylinderdurchmessers (D) entspricht.

2. Brennkraftmaschine nach Anspruch 1, **dadurch gekennzeichnet, dass** das zweite Hauptlager (7) durch zwei vorzugsweise mit axialem Abstand voneinander nebeneinander angeordnete Gleitlager (7a, 7b) gebildet ist.

3. Brennkraftmaschine nach Anspruch 1 oder 2, **dadurch gekennzeichnet, dass** zumindest eines der Hauptlager (6, 7, 8) als geteiltes Lager mit zwei zusammenfügbaren Lagerhälften ausgebildet ist.

4. Brennkraftmaschine nach einem der Ansprüche 1 bis 3, **dadurch gekennzeichnet, dass** die Kurbelwelle (5) zumindest einfach geteilt ist.

5. Brennkraftmaschine nach einem der Ansprüche 1 bis 4, **dadurch gekennzeichnet, dass** in der Kurbelwelle (5) zumindest ein das zweite Hauptlager (7) und zumindest ein Pleuellager strömungsverbindender Ölkanal (11) angeordnet ist.

## Claims

1. An internal combustion engine, especially for racing vehicles, comprising four cylinders, a crankshaft (5) which is mounted via a first, second and third main bearing (6, 7, 8), wherein the first main bearing (6) and the third main bearing (8) are arranged outside of outer cranks (5a, 5d) of the crankshaft (5), and the second main bearing (7) is arranged between two inner cranks (5b, 5c) of the crankshaft (5), wherein the first and third main bearing (6, 8) are respectively formed by at least one roller bearing, and wherein the second main bearing (7) is formed by at least one plain bearing, **characterised in that** at least one main bearing wall (10) of a main bearing (6, 7, 8) has a distance (c) from the closest cylinder axis (2a) which corresponds maximally to 30%, preferably maximally to approx. 25%, of the cylinder diameter (D).

2. An internal combustion engine according to claim 1, **characterised in that** the second main bearing (7) is formed by two plain bearings (7a, 7b) which are arranged next to one another preferably with axial distance from each other.

3. An internal combustion engine according to claim 1 or 2, **characterised in that** at least one of the main bearings (6, 7, 8) is arranged as a divided bearing with two half-bearings that can be joined.

4. An internal combustion engine according to one of the claims 1 to 3, **characterised in that** the crankshaft (5) is divided at least once.

5. An internal combustion engine according to one of the claims 1 to 4, **characterised in that** at least one oil duct (11) which flow-connects the second main bearing (7) and at least one connecting-rod bearing is arranged in the crankshaft (5).

## Revendications

1. Moteur à combustion interne en particulier pour voiture de course comportant quatre cylindres, un vilebrequin (5) qui est monté sur un premier, un second et un troisième palier principal (6, 7, 8), le premier palier principal (6) et le troisième palier principal (8) étant situés à l'extérieur de coudes externes (5a, 5b) du vilebrequin (5) tandis que le second palier principal (7) est situé entre deux coudes internes (5b, 5c) du vilebrequin (5), le premier et le troisième palier principal (6, 8) étant formés par au moins un palier à roulement respectif et le second palier principal (7) étant formé par au moins un palier à glissement,
**caractérisé en ce qu'**
au moins une paroi de palier principale (10) d'un palier principal (6, 7, 8) est située à une distance (c) à l'axe du cylindre (2a) le plus proche qui correspond au maximum à 30 % de préférence au maximum à environ 25 % du diamètre (D) du cylindre.

2. Moteur à combustion interne conforme à la revendication 1,
**caractérisé en ce que**
le second palier principal (7) est formé par deux paliers à glissement (7a, 7b) positionnés de préférence au voisinage l'un de l'autre à distance axiale l'un de l'autre.

3. Moteur à combustion interne conforme à la revendication 1 ou 2,
**caractérisé en ce qu'**
au moins l'un des paliers principaux (6, 7, 8) est réalisé sous la forme d'un palier subdivisé avec deux moitiés de palier pouvant être assemblées.

4. Moteur à combustion interne conforme à l'une des revendications 1 à 3,
**caractérisé en ce que**
le vilebrequin (5) est fendu au moins une fois.

5. Moteur à combustion interne conforme à l'une des revendications 1 à 4,
**caractérisé en ce que**
dans le vilebrequin (5) sont montés au moins un canal d'huile (11) reliant par une liaison fluidique le second palier principal (7) et au moins un coussinet de bielle.
